# FASCICULE DE BREVET EUROPEEN

(11) **EP 3 944 687 B1**
(45) Date de publication et mention de la délivrance du brevet: **01.05.2024**
(21) Numéro de dépôt: 20305846.6
(22) Date de dépôt: 23.07.2020
(51) Int. Cl.: H04W 72/02, H04W 72/0453, H04W 72/54

(54) **SYSTÈME DE RADIOCOMMUNICATION AVEC RÉSISTANCE AUX PERTURBATIONS RADIO**
FUNKKOMMUNIKATIONSSYSTEM MIT RESISTENZ GEGEN FUNKSTÖRUNGEN
RADIOCOMMUNICATION SYSTEM WITH RESISTANCE TO RADIO DISTURBANCES

(43) Date de publication de la demande: 26.01.2022
(73) Titulaire: Vogo, 34000 Montpellier (FR)
(72) Inventeur: VINCENT, Rémy, 38000 GRENOBLE (FR); SAGUIN, Pascal, 38830 CRETS EN BELLEDONNE (FR); SCANDELLA, Jérôme, 01120 LA BOISSE (FR); DE BARROS, Fabien, 38530 PONTCHARRA (FR)
(74) Mandataire: Germain Maureau

(56) Documents cités:
- EP-A1- 2 988 449
- WO-A2-02/31991

## Description

### DOMAINE TECHNIQUE DE L'INVENTION

L'invention concerne un procédé de radiocommunication entre un dispositif de communication primaire et au moins un dispositif de communication secondaire compris dans un groupe de dispositifs de communication secondaires.

L'invention concerne plus particulièrement un procédé de radiocommunication réalisé en temps réel, autrement dit immédiatement et sans attente.

### TECHNIQUE ANTÉRIEURE

Les procédés de radiocommunication entre un dispositif de communication primaire et au moins un dispositif de communication secondaire peuvent subir des perturbations généralement présentes sur les canaux de communication. Ces perturbations nuisent aux systèmes de radiocommunication en ce que la donnée utile ou donnée applicative transmise d'un dispositif à l'autre telle que la voix, devient inexploitable à la réception.

Il existe divers procédés de radiocommunication permettant la résistance du lien de radiocommunication aux perturbations généralement présentes sur les canaux de communication, également appelés fréquences porteuses.

Ainsi, un premier procédé consiste en la sélection statique et manuelle de canaux de communication non perturbés pour la transmission d'un signal. Dans ce premier procédé, l'opérateur réalise pour chaque canal de communication une mesure de la puissance en réception d'un signal reçu qui fournit une indication sur une intensité du signal reçu appelée RSSI pour received signal strength indication. L'opérateur peut ainsi piloter des dispositifs de communication du réseau et changer le canal de communication entre ces dispositifs. Cependant, le RSSI est difficile à mesurer en pratique du fait qu'il fluctue lorsqu'un obstacle s'interpose entre deux dispositifs de communication. Par ailleurs, ce procédé requiert une présence d'un opérateur dédié et qu'il intervienne sur l'ensemble des dispositifs de communication.

Un deuxième procédé consiste en un ajout d'informations redondantes lors de la transmission d'un signal entre les dispositifs de communication. Les protocoles de transmission TDMA à accès multiple à répartition dans le temps permettent à plusieurs utilisateurs de partager la même fréquence porteuse ou canal de communication en divisant le signal en paquets radios transmis en plusieurs intervalles de temps ou time slots. Chaque paquet radio contient un nombre de bits d'information défini. Une perturbation du signal à transmettre résulte en une modification d'un bit d'information et de ce fait le paquet radio contenant ce bit d'information devient inexploitable à la réception. Une redondance d'information consiste à rajouter une même information plusieurs fois dans le signal à transmettre de façon à rendre les paquets radio perturbés utilisables à la réception. Une redondance d'information peut être réalisée de deux manières différentes : à travers une duplication du paquet radio, dans ce cas le paquet dupliqué du signal à transmettre sera émis à un instant différent ou bien sur une fréquence porteuse différente, ou bien à travers un encodage du paquet radio et dans ce cas la taille du paquet radio du signal à transmettre sera plus grande mais un encodage du paquet radio permettra de restaurer quelques bits d'information perturbés au sein du paquet radio.

Cependant, la redondance d'informations transmises requiert une large bande passante de fréquences et par conséquent, ne peut être utilisée que pour un faible nombre de dispositifs de communication lorsque la bande passante disponible est limitée, notamment lorsque la communication entre les différents dispositifs se fait en temps réel. Par ailleurs, la redondance d'informations transmises peut augmenter une latence de communication, ce qui n'est pas souhaitable dans le contexte d'une communication en temps réel.

Un troisième procédé comprend un étalement de spectre par saut de fréquence ou FHSS. Il consiste en la transmission d'un signal par un dispositif de communication émetteur à un dispositif récepteur en utilisant alternativement plusieurs canaux de communication répartis dans une bande de fréquence selon une séquence pseudo-aléatoire connue du dispositif émetteur et du dispositif récepteur. Ce procédé apporte une immunité statistique à une présence de perturbateurs éventuels.

Cependant, le FHSS adopte une approche systématique de modification de la fréquence porteuse et aggrave le problème de congestion dans les communications radio. Par ailleurs, l'utilisation du procédé FHSS n'est pas possible dans certaines zones géographiques pour des raisons de norme.

Un quatrième procédé permettant la résistance du lien de radiocommunication aux perturbations consiste à détecter la présence d'un dispositif de communication émettant un signal - dépassant un certain seuil de puissance, par exemple -62dBm, sur un canal de communication pour attribuer ensuite au signal à transmettre un canal de communication où aucun autre dispositif de communication n'est détecté. La perturbation du signal à transmettre est ainsi évitée puisqu'il est transmis sur une fréquence porteuse sur laquelle aucun autre dispositif n'émet un signal au moins aussi fort que le seuil donné. Il s'agit de la sélection dynamique de fréquence ou DFS (dynamic frequency sélection).

Cependant, ce procédé requiert une large bande de fréquences et l'attribution d'une fréquence porteuse repose sur la mesure du RSSI qui, comme précédemment énoncé, est difficile à mesurer en pratique du fait qu'il fluctue lorsqu'un obstacle s'interpose entre deux dispositifs de communication.

WO231991 A2 décrit un procédé d'attribution de canal de trafic entre une station de base et plusieurs terminaux.

La présente invention a pour but de résoudre tout ou partie des inconvénients mentionnés ci-dessus.

### Description Générale

Ce but peut être atteint grâce à la mise en oeuvre d'un procédé de radiocommunication entre un dispositif de communication primaire et au moins un dispositif de communication secondaire, le procédé utilisant une ou plusieurs fréquence(s) porteuse(s) applicative(s) pour la transmission d'une donnée applicative, le procédé étant exécuté par le dispositif de communication primaire et comprenant les étapes suivantes :
- Réception d'une information relative à une qualité d'un lien de communication sur au moins une fréquence porteuse comprise dans un premier groupe de fréquences porteuses en provenance de l'au moins un dispositif de communication secondaire;
- Réalisation d'un diagnostic de communication à partir de l'information relative à la qualité du lien de communication sur l'au moins une fréquence porteuse réseau;
- Extraction d'un sous-groupe de fréquences porteuses susceptibles de devenir des fréquences porteuses applicatives et de porter un signal à transmettre à partir du groupe de fréquences porteuses ;
- Sélection de la fréquence porteuse applicative dans le sous-groupe de fréquences porteuses ;
- Etablissement d'une communication applicative entre le dispositif de communication primaire et l'au moins un dispositif de communication secondaire sur la fréquence porteuse applicative.

Le procédé peut également comprendre l'étape suivante :
- Envoi de la donnée applicative à destination du dispositif de communication secondaire sur la fréquence porteuse applicative.

Au sens de l'invention on entend par donnée applicative une donnée audio et/ou une donnée vidéo, on encore d'autres type de données destinées à être diffusées en temps réel.

Au sens de l'invention, le procédé de radiocommunication susceptible d'utiliser une communication sur une fréquence porteuse applicative choisie parmi une pluralité de fréquences porteuses peut être appelé procédé de radiocommunication multicanal, le choix de la fréquence porteuse applicative correspondant à la définition d'un canal de communication.

Selon un mode de mise en oeuvre, la réception d'une information relative à une qualité d'un lien de communication se fait sur une pluralité de fréquences porteuses réseaux comprise dans un groupe de fréquences porteuses en provenance de l'au moins un dispositif de communication secondaire.

Selon une possibilité, la réalisation d'un diagnostic de communication à partir de l'information relative à la qualité du lien de communication se fait sur une pluralité de fréquences porteuses réseau.

Les dispositions selon l'invention permettent d'éviter des perturbations radio généralement présentes sur les canaux de communication : les dispositifs de communications primaires et secondaires sont à même de détecter les canaux de communication perturbés sans mesurer le RSSI du signal à transmettre et de basculer par la suite, de manière autonome et sans faire appel aux services d'un opérateur, sur les canaux de communication non perturbés pour la transmission du signal, tout en évitant de générer une congestion dans les communications radio.

Selon un mode de mise en oeuvre, le procédé peut comprendre la sélection de plusieurs fréquences porteuses applicatives et l'établissement de communication sur une pluralité de fréquences porteuses applicatives sélectionnées dans le sous-groupe de fréquences porteuses. Ces dispositions s'appliquent notamment lorsque le système de radiocommunication est dans un état établi de communication non perturbée, la donnée applicative pouvant être transmises sur une pluralité de fréquences porteuses.

Selon un mode de mise en oeuvre, le procédé comprend l'étape d'envoi d'un paquet d'informations sur l'au moins une fréquence porteuse comprise dans le groupe de fréquences porteuses par le dispositif de communication primaire vers l'au moins un dispositif de communication secondaire.

Selon un mode de mise en oeuvre, l'envoi de paquets d'information est réalisé sur une pluralité de fréquences porteuses comprises dans le premier groupe de fréquences porteuses. En particulier, l'envoi peut être réalisé sur l'ensemble des fréquences porteuses comprises dans le premier groupe de fréquences porteuses.

L'étape de réception d'une information relative à une qualité d'un lien de communication sur différentes fréquences porteuses (entre le dispositif de communication primaire et l'au moins un dispositif de communication secondaire) en provenance de l'unité esclave correspond à la détermination de ladite information à partir de la réception du paquet d'information sur différentes fréquences porteuses.

Selon un mode de mise en oeuvre, ces dispositions correspondent à une configuration dans laquelle le dispositif de communication primaire est un dispositif maître et les dispositifs de communications secondaires sont des dispositifs esclaves.

Selon un mode de mise en oeuvre, le paquet d'informations envoyé sur l'au moins une fréquence porteuse comprise dans le premier groupe de fréquences porteuses par le dispositif de communication primaire à l'au moins un dispositif de communication secondaire comporte des informations de configuration réseau et/ou de synchronisation de l'au moins un dispositif de communication secondaire.

Selon un mode de mise en oeuvre, la radiocommunication est réalisée entre un dispositif de communication primaire et un groupe de dispositifs de communication secondaires comprenant au moins un dispositif de communication secondaire.

Selon l'invention, lors de la mise en oeuvre du procédé, le dispositif primaire peut devenir dispositif secondaire et inversement un dispositif secondaire peut devenir le dispositif primaire.

Selon un mode de mise en oeuvre, la radiocommunication peut être réalisée entre un dispositif de communication primaire et un groupe de dispositifs de communication secondaires, et l'extraction du sous-groupe de fréquences porteuses peut se faire selon les étapes suivantes :
- Attribution d'une note partielle pour chaque dispositif de communication secondaire compris dans le groupe de dispositifs de communication secondaires pour l'au moins une fréquence porteuse comprise dans le groupe de fréquences porteuses à partir de l'information relative à la qualité du lien de communication sur ladite fréquence porteuse reçue en provenance dudit dispositif de communication secondaire ;
- Détermination d'une note globale pour l'au moins une fréquence porteuse comprise dans le groupe de fréquences porteuses à partir d'une pluralité de notes partielles pour la fréquence porteuse obtenue pour une pluralité de dispositif de communication secondaire compris dans le groupe de dispositifs de communication secondaires ;
- Classement de l'au moins une fréquence porteuse dans le sous-groupe de fréquences porteuses sur la base de la note globale pour l'au moins une fréquence porteuse.

Selon une possibilité, le sous-groupe de fréquences porteuses P2 contient un nombre de fréquences porteuses inférieur ou égal au nombre de fréquences porteuses contenues dans le groupe de fréquences porteuses P1.

Selon un mode de réalisation, l'étape de détermination d'une note globale pour une fréquence comprend l'étape d'une exclusion d'au moins un dispositif de communication secondaire sur la base de la note partielle attribuée pour le calcul de la note globale pour l'au moins une fréquence porteuse comprise dans le groupe de fréquences porteuses.

Selon ces dispositions, un dispositif de communication secondaire qui présente une mauvaise note pour toutes les fréquences porteuses est exclu du calcul ou de la détermination du calcul de la note globale.

Selon un mode de réalisation, le procédé comprend en outre les étapes suivantes :
- Calcul d'une information relative à la qualité de la transmission de la donnée applicative émise par l'au moins un dispositif de communication secondaire sur la fréquence porteuse applicative et/ou
- Réception de l'information relative à la qualité de la transmission de la donnée applicative émise par le dispositif de communication primaire sur la fréquence porteuse applicative, en provenance de l'au moins un dispositif de communication secondaire:
- Réalisation d'un diagnostic applicatif sur la fréquence porteuse applicative à partir de l'information relative à la qualité de la transmission de la donnée applicative sur la fréquence porteuse applicative ;
- Mise à jour du sous-groupe de fréquences porteuses à partir du diagnostic applicatif sur la fréquence porteuse applicative;
- Les étapes suivantes du procédé étant à nouveau réalisées :
- Sélection de la fréquence porteuse applicative dans le sous-groupe de fréquences porteuses;
- Etablissement d'une communication applicative entre le dispositif de communication primaire et l'au moins un dispositif de communication secondaire sur la fréquence porteuse applicative.

Selon un mode de mise en oeuvre, la sélection d'une fréquence porteuse applicative se fait à partir du groupe de fréquence porteuses.

Selon une possibilité, la mise à jour du sous-groupe de fréquences porteuses comprend un reclassement de la fréquence porteuse applicative sur la base de l'information relative à la fréquence porteuse applicative dans le sous-groupe de fréquences porteuses si l'information relative à la fréquence porteuse applicative est de qualité insuffisante.

Si au contraire, l'information relative à la fréquence porteuse applicative est de qualité suffisante alors la transmission de la donnée applicative continue de se faire sur fréquence applicative. Selon ces dispositions, l'information relative à la qualité du lien de communication est un taux d'erreur relative aux paquets envoyés par le dispositif de communication primaire et reçus par l'au moins un dispositif de communication secondaire.

En outre, le procédé de radiocommunication décrit est exécuté par l'au moins un dispositif de communication secondaire et comprend les étapes suivantes :
- Elaboration d'une information relative à une qualité d'un lien de communication sur au moins une fréquence porteuse comprise dans un groupe de fréquences porteuses à transmettre au dispositif de communication primaire;
- Envoi de l'information relative à la qualité du lien de communication sur au moins une fréquence porteuse comprise dans le groupe de fréquences porteuses au dispositif de communication primaire.

Selon une possibilité, le procédé de radiocommunication décrit comprend les étapes de :
- Réception d'un paquet d'informations sur l'au moins une fréquence porteuse comprise dans le groupe de fréquences porteuses en provenance du dispositif de communication primaire;
- Configuration de l'au moins un dispositif de communication secondaire sur la base du paquet d'informations sur l'au moins une fréquence porteuse comprise dans le groupe de fréquences porteuses en provenance du dispositif de communication primaire;
- Synchronisation de l'au moins un dispositif de communication secondaire au dispositif de communication primaire sur la base du paquet d'informations sur l'au moins une fréquence porteuse comprise dans le groupe de fréquences porteuses en provenance du dispositif de communication primaire.

Selon une possibilité, le procédé de radiocommunication décrit comprend également les étapes de :
- Calcul d'une information relative à une qualité d'une transmission d'une donnée applicative émise par l'au moins un dispositif de communication secondaire sur la fréquence porteuse applicative;
- Envoi de l'information relative à la qualité de la transmission de la donnée applicative émise par l'au moins un dispositif de communication secondaire sur la fréquence porteuse applicative au dispositif de communication primaire.

Selon un mode de mise en oeuvre, le calcul de l'information relative à la qualité de la transmission de la donnée applicative émise par l'au moins un dispositif de communication secondaire sur la fréquence porteuse applicative se fait sur un intervalle de temps sensiblement compris entre 1 seconde et 10 secondes.

Selon une possibilité, une détection d'un début et/ou d'une fin de transmission de la donnée applicative sur la fréquence porteuse applicative se fait préalablement au calcul de l'information relative à la qualité de la transmission de la donnée applicative sur la fréquence porteuse applicative.

Selon un mode de mise en oeuvre, la transmission de la donnée applicative se fait par une pluralité de paquets radio et le procédé est exécuté par le dispositif de communication primaire et comprend les étapes suivantes :
- Une hiérarchisation du dispositif de communication primaire et de l'au moins un dispositif de communication secondaire;
- Une priorisation pour la transmission de la donnée applicative sur la fréquence porteuse applicative sur la base de la hiérarchisation pour désigner un dispositif de communication prioritaire ;
- Une transmission de la donnée applicative sur la fréquence porteuse applicative par une pluralité de paquets radio avec une redondance de la donnée applicative transmise par dispositif de communication prioritaire.

Le dispositif de communication prioritaire peut par exemple désigner le dispositif de communication utilisé par un arbitre central lors d'une rencontre sportive.

Par ailleurs, pour un système de radiocommunication mettant en oeuvre le procédé de radiocommunication décrit, est associé un procédé de gestion du fonctionnement dudit système de radiocommunication entre un dispositif de communication primaire et au moins un dispositif de communication secondaire, le système comprenant un centre de contrôle et le procédé étant exécuté par le centre de contrôle et comprenant les étapes suivantes :
- Réception d'une information relative au fonctionnement du système de radiocommunication par le centre de contrôle;
- Envoi d'une information relative à une opération de gestion du système de radiocommunication sur la base de l'information relative au fonctionnement du système de radiocommunication en vue d'une modification du fonctionnement du dispositif de radiocommunication primaire et/ou du groupe de dispositifs de communication secondaires sur la base de l'information.

Selon un mode de mise en oeuvre, l'information relative au fonctionnement du système de radiocommunication est reçue en provenance d'un dispositif de renseignements appartenant au système de radiocommunication.

### Description en référence aux figures

L'invention sera mieux comprise à l'aide de la description détaillée qui est exposée ci-dessous en regard du dessin annexé dans lequel :
[Fig.1] est un schéma représentatif d'un mode de réalisation d'un système permettant la mise en oeuvre d'un procédé de radiocommunication selon l'invention.
[Fig.2] est un schéma présentant les différents types de données et d'informations circulant lors de la transmission d'un signal de radiocommunication dans le système de la figure 1.
[Fig.3] est un schéma représentant des étapes d'une compression d'un signal audio à transmettre dans le système de la figure 1.
[Fig.4] est un diagramme de séquence représentant différentes étapes dans l'exécution du procédé de radiocommunication entre un dispositif de communication primaire et un dispositif de communication secondaire du système de la figure 1.
[Fig.5] est un diagramme décrivant une sélection d'une fréquence porteuse applicative pour la transmission d'une donnée applicative dans le procédé de la figure 4.
[Fig.6] est un graphique représentant une attribution d'une note partielle pour un dispositif de communication secondaire dans le procédé de la figure 4.
[Fig.7] est un schéma représentant une communication entre un centre de contrôle et un dispositif de renseignement appartenant au système de la figure 1.
[Fig.8] est un organigramme représentant des étapes d'allocation de paquets radio applicatifs selon un rôle spécifique pour un dispositif de communication mettant en oeuvre le procédé de radiocommunication décrit dans la figure 2.

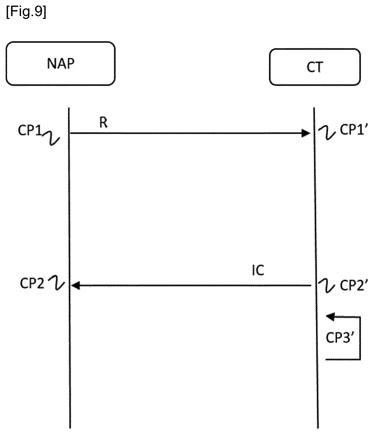

[Fig.9] est un diagramme de séquence représentant différentes étapes décrivant une maintenance du système de radiocommunication de la figure 1.

Dans la description détaillée qui va suivre les figures définies ci-dessus, les mêmes éléments ou les éléments remplissant des fonctions identiques pourront conserver les mêmes références de manière à simplifier la compréhension de l'invention.

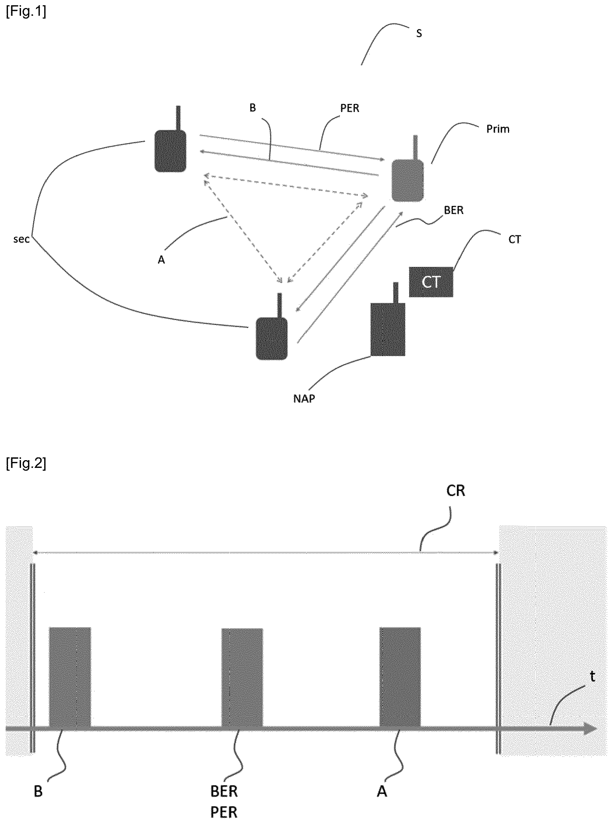

Comme représenté sur la figure 1, un mode de réalisation d'un système de radiocommunication S permettant la mise en oeuvre d'un procédé de radiocommunication selon l'invention, comprend un dispositif de communication primaire Prim et un groupe de dispositifs de communication secondaires comprenant au moins un dispositif de communication secondaire Sec.

Comme représenté sur la figure 1, une transmission de la donnée applicative A se fait entre le dispositif de communication primaire Prim et le groupe de dispositifs de communication secondaires comprenant l'au moins un dispositif de communication secondaire Sec.

Une transmission d'une information BER relative à une qualité d'un lien de communication sur au moins une fréquence porteuse fp se fait entre le groupe de dispositifs de communication secondaires et le dispositif de communication primaire Prim et une transmission d'un paquet d'informations B se fait depuis le dispositif de communication primaire Prim vers le groupe de dispositifs de communication secondaires.

Selon une possibilité, le système comprend également un centre de contrôle CT et un dispositif de renseignement NAP. Le dispositif de renseignement NAP facilite la création d'un lien de communication entre le système de radiocommunication S et un autre réseau, par exemple le réseau internet et à des fins par exemple de mettre en communication le centre de contrôle CT avec le système de radiocommunication S.

La figure 2 présente les différents types de données transmises au cours du temps t entre le dispositif primaire Prim et le groupe de dispositif secondaire lors d'un cycle radio CR selon un exemple de réalisation:
- La donnée applicative A: au sens de l'invention on entend par donnée applicative une données audio et/ou une donnée vidéo, ou encore d'autres types de données destinées à être diffusées en temps réel.
   Chaque dispositif émet en mode dit « broadcast » la donnée applicative A et un protocole de communication radio assure une communication de type full-duplex. La donnée applicative A est émise sur un ensemble de fréquences porteuses choisies parmi une pluralité de fréquences porteuses puisqu'elles assurent le meilleur lien de communication radio
- Deux types d'information relative à une qualité d'un lien de communication sur au moins une fréquence porteuse : chaque dispositif secondaire Sec interrogé par le dispositif de communication primaire Prim, lui transmet une information BER relative à la qualité d'un lien de communication et une information relative à la qualité de la transmission d'une donnée applicative PER, qui permettent une détection d'une détérioration d'un lien de communication.
- Une information B de synchronisation et configuration sur l'au moins une fréquence porteuse fp comprise dans un groupe de fréquences porteuses P1 par le dispositif de communication primaire Prim vers l'au moins un dispositif de communication secondaire Sec; l'information B est émise périodiquement sur une fréquence porteuse fp autorisée par une législation locale.

Selon une possibilité, l'information B est transmise sur une fréquence porteuse différente lors de chaque cycle radio.

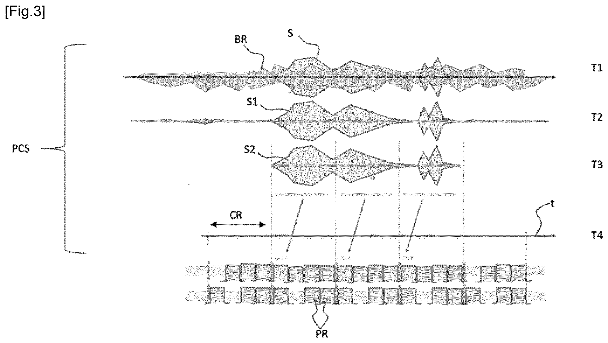

La figure 3 présente un procédé PCS de numérisation et de compression d'un signal à transmettre selon le procédé de radiocommunication. Ledit procédé de numérisation et de compression permet de traiter un signal à transmettre, par exemple un signal audio afin d'assurer une communication claire dans un environnement bruyant.

Ainsi comme représenté dans la figure 3,
1. Au cours d'une première étape T1, un signal S à transmettre est capté par un microphone qui peut prendre la forme d'un micro-casque par exemple. Le signal S peut être noyé dans un environnement bruyant BR, par exemple un bruit de foule ou un bruit de machine et n'est pas exploitable pour une communication.
2. Au cours d'une deuxième étape T2, le signal S est numérisé et filtré pour en tirer un deuxième signal dépourvu de bruit S1 grâce à des algorithmes de traitement d'un signal qui atténuent le bruit d'une valeur sensiblement égale à 30dB. Le signal S1 est de ce fait exploitable pour une transmission.
3. Au cours d'une troisième étape T3, le signal S1 est traité par des algorithmes de traitement d'un signal pour en extraire un nouveau signal S2 qui comprend une information utile à transmettre qui désigne la donnée applicative A. Selon un mode de réalisation, l'information utile à transmettre est par exemple une voix d'un arbitre d'un évènement sportif.
4. Au cours d'une quatrième étape T4, le signal S2 est comprimé en une pluralité de paquets radio PR. Selon l'invention, la pluralité de paquets radio PR représente une fenêtre temporelle à un instant dans le cycle radio CR, dont la durée varie en fonction de la quantité de données à transmettre.

Dans le procédé de compression utilisé, la pluralité de paquets radio PR s'agencent de manière cyclique dans le temps t

Dans le procédé de compression utilisé, un seul dispositif de communication peut émettre un signal S à transmettre et sur une seule fréquence porteuse fp à la fois. Dans le procédé de compression utilisé, un dispositif de communication qui n'émet aucun signal à transmettre, détecte le signal transmis par un autre dispositif de communication à un instant donné sur une seule fréquence porteuse.

Le protocole de compression décrit ci-dessus correspond par exemple à un protocole de type accès multiple à répartition dans le temps ou TDMA.

Dans le procédé de radiocommunication décrit, une allocation d'un temps de transmission de la donnée applicative A est réalisée de manière dynamique, autrement dit un intervalle de temps dans le cycle radio n'est pas attribué de manière permanente à un dispositif de communication défini, mais plutôt de manière temporaire, lorsque l'intervalle de temps n'est pas préalablement alloué à une transmission d'un signal par un autre dispositif de communication et qu'un dispositif de communication transmet la donnée applicative A.

L'avantage de l'allocation dynamique des paquets radio au sein d'un système de radiocommunication est de permettre l'utilisation d'un nombre réduit de paquets radio disponibles pour la transmission d'un signal par un grand nombre de dispositifs de communication, en particulier lorsque moins de paquet radio que de dispositifs de communication sont disponibles.

### Synchronisation du cycle radio par le dispositif de communication primaire

Les dispositifs de communication doivent être synchronisés au cours d'un protocole de type accès multiple à répartition dans le temps ou TDMA afin d'avoir un instant de début du cycle radio commun à tous les dispositifs de communication et afin que la position de la pluralité des paquets radio PR soit connue avec précision, ce qui permet au dispositif de communication de déchiffrer un signal émis depuis un autre dispositif et de transmettre un signal pouvant être déchiffré par les autres dispositifs de communication.

Dans le procédé de radiocommunication décrit, le dispositif de communication primaire est garant de la synchronisation des autres dispositifs de communication.

Le dispositif de communication primaire émet un premier paquet radio dans le cycle radio. Selon une possibilité, le premier paquet radio est appelé paquet d'information B ou bien paquet « Beacon ».

Les dispositifs de communication secondaires utilisent le paquet d'information B pour se synchroniser.

Le dispositif de communication primaire émet le paquet d'information B de façon répétitive afin que le groupe de dispositifs de communication secondaires puisse se synchroniser et d'éviter ainsi des dérives d'horloges internes aux dispositifs de communication.

Le paquet d'information B comprend une information de configuration et de paramétrage du groupe de dispositifs de communication secondaires.

Dans le procédé de radiocommunication décrit, il existe plusieurs types de transmission d'un signal entre le dispositif de communication primaire et l'au moins un dispositif de communication secondaire Sec contenu dans le groupe de dispositifs de communication secondaires :
- L'information B de configuration du système de radiocommunication en provenance du dispositif de communication primaire et à destination de l'au moins un dispositif de communication secondaire Sec ;
- La donnée applicative A, par exemple une voix d'un arbitre d'un évènement sportif, émise par le dispositif de communication primaire Prim ou l'au moins un dispositif de communication secondaire Sec vers le dispositif de communication primaire Prim ou l'au moins un dispositif de communication secondaire Sec ;
- L'information BER et/ou PER relative à la qualité de la transmission d'un signal au sein du système de radiocommunication.

L'information relative à une qualité d'une transmission d'un signal au sein du système de radiocommunication peut être une information BER relative à une qualité d'un lien de communication sur au moins une fréquence porteuse fp comprise dans un groupe de fréquences porteuses P1 en provenance de l'au moins un dispositif de communication secondaire Sec et à destination du dispositif de communication primaire Prim.

L'information relative à la qualité de la transmission du signal au sein du système de radiocommunication désigne une information PER relative à la qualité de la transmission de la donnée applicative A émises par le dispositif de communication primaire Prim ou l'au moins un dispositif de communication secondaire Sec.

### Description du procédé de radiocommunication

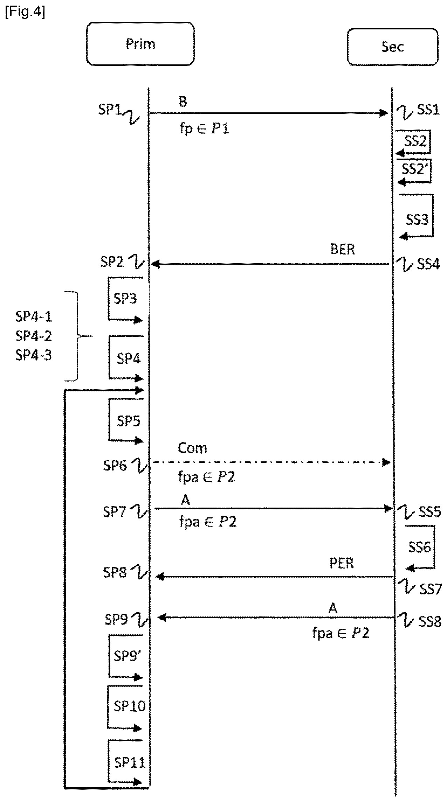

La figure 4 présente un diagramme de séquences du procédé de radiocommunication entre un dispositif de communication primaire Prim et un dispositif de communication secondaire Sec, le procédé utilisant une fréquence porteuse applicative fpa pour la transmission de la donnée applicative A.

Selon un mode de mise en oeuvre, ces dispositions correspondent à une configuration dans laquelle le dispositif de communication primaire Prim est un dispositif maître et le groupe de dispositifs de communications secondaires est un groupe de dispositifs esclaves.

Au sens de l'invention, le procédé de radiocommunication susceptible d'utiliser une communication sur une fréquence porteuse applicative fpa choisie parmi une pluralité de fréquences porteuses peut être appelé procédé de radiocommunication multicanal, le choix de la fréquence porteuse applicative fpa correspondant à la définition d'un canal de communication.

Selon un mode de réalisation, le procédé comprend une étape d'envoi SP1 d'un paquet d'informations B sur l'au moins une fréquence porteuse fp comprise dans le groupe de fréquences porteuses P1 par le dispositif de communication primaire Prim vers l'au moins un dispositif de communication secondaire Sec.

Le paquet d'information B peut être émis par dispositif de communication primaire à chaque cycle radio sur une fréquence porteuse différente. Les dispositifs de communication secondaires peuvent se synchronisent à la réception d'un paquet B de la part du dispositif de communication primaire. Le paquet d'information B contient par exemple des informations de configuration réseau et/ou de synchronisation du groupe de dispositifs de communication secondaires qui permettent au groupe de dispositifs de communication secondaires de suivre une séquence d'émission des paquets d'information B par le dispositif de communication primaire Prim.

Suite à l'étape d'envoi SP1 réalisée par le dispositif de communication primaire Prim, l'au moins un dispositif de communication secondaire Sec procède à la réception SS1 du paquet d'informations B sur l'au moins une fréquence porteuse fp comprise dans le groupe de fréquences porteuses P1 en provenance du dispositif de communication primaire Prim. Puis a lieu une étape de configuration SS2 de l'au moins un dispositif de communication secondaire Sec sur la base du paquet d'informations B sur l'au moins une fréquence porteuse fp comprise dans le groupe de fréquences porteuses P1 en provenance du dispositif de communication primaire Prim, ainsi qu'une étape de synchronisation SS2' de l'au moins un dispositif de communication secondaire Sec au dispositif de communication primaire Prim sur la base du paquet d'informations B sur l'au moins une fréquence porteuse fp comprise dans le groupe de fréquences porteuses P1 en provenance du dispositif de communication primaire Prim.

L'au moins un dispositif de communication secondaire procède ensuite à une Elaboration SS3 d'une information BER relative à la qualité du lien de communication sur l'au moins une fréquence porteuse fp comprise dans le groupe de fréquences porteuses P1 à transmettre au dispositif de communication primaire Prim ainsi qu'à un envoi SS4 de l'information BER relative à la qualité du lien de communication sur l'au moins une fréquence porteuse fp comprise dans le groupe de fréquences porteuses P1 au dispositif de communication primaire Prim.

L'information BER peut être considérée comme une statistique relative aux paquets B perturbés reçus, pour chaque fréquence porteuse. Cette statistique constitue une information relative à la qualité du lien de communication entre le dispositif de communication primaire et le dispositif de communication secondaire.

L'information BER relative à la qualité du lien de communication peut correspondre à un taux d'erreur relative aux paquets envoyés par le dispositif de communication primaire Prim et reçus par l'au moins un dispositif de communication secondaire Sec.

Au cours d'une étape SP2, le dispositif de communication primaire reçoit l'information BER relative à la qualité du lien de communication sur l'au moins une fréquence porteuse réseau fp comprise dans un groupe de fréquences porteuses P1 en provenance de l'au moins un dispositif de communication secondaire Sec. Le dispositif de communication primaire réalise lors d'une étape de réalisation SP3 un diagnostic de communication à partir de l'information BER relative à la qualité du lien de communication sur l'au moins une fréquence porteuse réseau fp, ainsi qu'une extraction SP4 d'un sous-groupe de fréquences porteuses P2 susceptibles de devenir des fréquences porteuses applicatives et de porter un signal à transmettre à partir du groupe de fréquences porteuses P1.

Une sélection SP5 d'une fréquence porteuse applicative fpa dans le sous-groupe de fréquences porteuses P2 a lieu suivie d'un établissement SP6 d'une communication applicative Com entre le dispositif de communication primaire Prim et l'au moins un dispositif de communication secondaire Sec sur la fréquence porteuse applicative fpa.

Selon un mode de mise en oeuvre, la réception d'une information BER relative à une qualité d'un lien de communication se fait sur une pluralité de fréquences porteuses réseaux comprise dans un groupe de fréquences porteuses P1 en provenance de l'au moins un dispositif de communication secondaire Sec.

Selon une possibilité, la réalisation d'un diagnostic de communication à partir de l'information relative à la qualité du lien de communication se fait sur une pluralité de fréquences porteuses réseau.

Selon une possibilité, l'extraction SP4 du sous-groupe de fréquences porteuses P2 se fait selon les étapes d'attribution SP4-1 d'une note partielle pour chaque dispositif de communication secondaire Sec compris dans le groupe de dispositifs de communication secondaires pour l'au moins une fréquence porteuse fp comprise dans le groupe de fréquences porteuses P1 à partir de l'information BER relative à la qualité du lien de communication sur ladite fréquence porteuse fp reçue en provenance dudit dispositif de communication secondaire (Sec), de détermination SP4-2 d'une note globale pour l'au moins une fréquence porteuse fp comprise dans le groupe de fréquences porteuses P1 à partir d'une pluralité de notes partielles pour la fréquence porteuse fp obtenue pour une pluralité de dispositif de communication secondaire compris dans le groupe de dispositifs de communication secondaires, de classement SP4-3 de l'au moins une fréquence porteuse dans le sous-groupe de fréquences porteuses P2 sur la base de la note globale pour l'au moins une fréquence porteuse fp.

La sélection de la fréquence porteuse applicative fpa peut être réalisé en choisissant la fréquence porteuse fp dans le sous-groupe de fréquences porteuses P2 présentant une note globale répondant à un critère déterminé, par exemple une note supérieure ou inférieure à une note d'autres fréquences porteuses dans le cas où la note est basée sur un taux d'erreur.

Selon une possibilité, une pluralité de fréquences porteuses applicatives peut être sélectionnée pour une communication sur plusieurs fréquences porteuses applicatives.

Par ailleurs, l'étape de détermination SP4-2 d'une note globale pour une fréquence comprend une exclusion d'au moins un dispositif de communication secondaire Sec sur la base de la note partielle attribuée pour le calcul de la note globale pour l'au moins une fréquence porteuse fp comprise dans le groupe de fréquences porteuses P1.

Selon une possibilité, le sous-groupe de fréquences porteuses P2 contient un nombre de fréquences porteuses inférieur ou égal au nombre de fréquences porteuses contenues dans le groupe de fréquences porteuses P1.

Selon un mode de mise en oeuvre, la réception de l'information BER relative à la qualité d'un lien de communication se fait sur une pluralité de fréquences porteuses réseaux comprise dans un groupe de fréquences porteuses P1 en provenance de l'au moins un dispositif de communication secondaire Sec.

Selon une possibilité, la réalisation d'un diagnostic de communication à partir de l'information relative à la qualité du lien de communication se fait sur une pluralité de fréquences porteuses réseau.

Ensuite, le dispositif de communication primaire Prim envoie la donnée applicative A à destination du dispositif de communication secondaire au cours d'une étape SP7 sur la fréquence porteuse applicative fpa.

Suite à la réception de la donnée applicative A par le dispositif de communication secondaire Sec dans une étape SS5 sur la fréquence porteuse applicative fpa, le dispositif de communication secondaire Sec réalise une étape de calcul SS6 d'une information PER relative à une qualité d'une transmission de la donnée applicative A émise par l'au moins un dispositif de communication secondaire Sec sur la fréquence porteuse applicative fpa;

Puis l'au moins un dispositif de communication secondaire procède à l'envoi SS7 de l'information PER relative à la qualité de la transmission de la donnée applicative A émise par l'au moins un dispositif de communication secondaire Sec sur la fréquence porteuse applicative fpa au dispositif de communication primaire Prim.

Selon un mode de mise en oeuvre, le calcul SS6 de l'information PER relative à la qualité de la transmission de la donnée applicative A émise par l'au moins un dispositif de communication secondaire Sec sur la fréquence porteuse applicative fpa se fait sur un intervalle de temps sensiblement compris entre 1 seconde et 10 secondes.

Selon une possibilité, une détection d'un début et/ou d'une fin de transmission de la donnée applicative A sur la fréquence porteuse applicative fpa se fait préalablement au calcul SS6 de l'information PER relative à la qualité de la transmission de la donnée applicative sur la fréquence porteuse applicative.

L'information PER est reçue par le dispositif Prim lors d'une étape de réception SP8 de l'information PER relative à la qualité de la transmission de la donnée applicative A émise par le dispositif de communication primaire Prim sur la fréquence porteuse applicative fpa, en provenance de l'au moins un dispositif de communication secondaire Sec et/ou le dispositif de communication primaire procède au calcul SP9' d'une information PER relative à la qualité de la transmission de la donnée applicative A émise par l'au moins un dispositif de communication secondaire Sec sur la fréquence porteuse applicative fpa suite à la réception de la donnée applicative A au cours de l'étape SP9.

Ensuite, le dispositif de communication primaire procède à la réalisation SP10 d'un diagnostic applicatif sur la fréquence porteuse applicative fpa à partir de l'information PER relative à la qualité de la transmission de la donnée applicative A sur la fréquence porteuse applicative fpa, puis à la mise à jour SP11 du sous-groupe de fréquences porteuses P2 à partir du diagnostic applicatif sur la fréquence porteuse applicative fpa.

Le dispositif de communication primaire Prim a ainsi accès à l'information PER relatifs aux communications émises et reçue par le dispositif de communication Prim et par le groupe de dispositifs de communication secondaires.

Et les étapes SP5 et SP6 du procédé sont à nouveau réalisées.

Selon une possibilité, la mise à jour SP11 du sous-groupe P2 de fréquences porteuses comprend un reclassement de la fréquence porteuse applicative fpa sur la base de l'information PER dans le sous-groupe de fréquences porteuses P2 si l'information PER relative à la fréquence porteuse applicative fpa est de qualité insuffisante, par exemple si elle dépasse 10% du nombre total de paquets radio reçus par un dispositif.

Si au contraire, l'information PER est de qualité suffisante, autrement dit si elle est de moins de 10% du nombre total de paquets radio reçus par un dispositif, alors la transmission de la donnée applicative A continue de se faire sur fréquence applicative fpa.

L'analyse de la qualité de la transmission de la donnée applicative A s'effectue selon deux approches :
- Une approche dite « opportuniste »: lorsqu'un utilisateur d'un dispositif de radiocommunication, par exemple un arbitre, émet un signal sonore, la donnée applicative transmise sur une fréquence porteuse applicative sert à calculer l'information PER sur ladite fréquence porteuse applicative. Une indication claire est ainsi obtenue de la qualité du lien de communication entre tous les dispositifs de radiocommunication
- Une approche dite « maitrisée et périodique » : cette approche est adoptée en l'absence d'une transmission d'un signal applicatif par exemple un signal audio au sein du système de radiocommunication S, les paquets radio applicatifs peuvent alors être utilisés pour la transmission de données non applicatives pendant plusieurs cycles radio CR consécutifs, de manière et simuler une communication et ainsi provoquer le calcul de BER.

Ainsi, chaque dispositif de communication est capable :
1. D'évaluer la qualité du lien de communication avec les autres dispositifs de communication au sein du système de radiocommunication y compris les dispositifs de communication qui n'émettent pas de donnée applicative.
2. D'évaluer périodiquement la qualité du lien de communication en vue d'anticiper un éventuel problème de communication.
3. D'identifier la nature des perturbateurs de façon précise.

Lorsqu'un dispositif de communication émet la donnée applicative A, le paquet radio contenant cette donnée applicative contient en plus une information relative à un nombre de paquets radio contenant la donnée applicative qui sont consécutifs au dit paquet radio.

L'information relative à un nombre de paquets radio contenant la donnée applicative A est calculée par le dispositif de communication qui émet le paquet radio contenant la donnée applicative.

Chaque dispositif de communication qui reçoit un paquet radio contenant la donnée applicative A peut prédire le nombre de paquets radio qui suivront du même dispositif de communication émetteur. Dès lors, le dispositif de communication est en mesure de détecter qu'un paquet radio n'a pas été reçu, notamment pour des raisons de perturbations radiofréquences.

L'au moins un dispositif de communication secondaire Sec transmet l'information PER au dispositif de communication primaire Prim, par exemple lorsque le dispositif de communication primaire Prim les demande.

Dans le procédé de radiocommunication décrit, les dispositifs de communication évaluent la présence de perturbations radio dans les divers canaux radio autorisés par les réglementations locales sans interrompre la transmission de la donnée applicative A.

Les dispositifs de communications sont en outre capables de déterminer de manière autonome lorsque le système de radiocommunication S quitte son régime établi et que les communications deviennent perturbées.

Une mutualisation des informations en provenance du groupe de dispositifs de communication secondaires permet alors au dispositif de communication primaire Prim de revoir le groupe de fréquences porteuses sur lequel il est possible de transmettre un signal sans perturbation radio.

Le dispositif de communication primaire Prim concentre les informations PER et BER de tous les dispositifs de communication dans le système de radiocommunication S.

Un algorithme de tri et de détection permet de détecter une éventuelle dégradation du lien de communication sur les fréquences porteuses applicatives.

A partir de l'information BER, le dispositif de communication primaire Prim est capable de trier les fréquences porteuses et de refuser la transmission du signal sur celles présentant une information BER de qualité insuffisante, par exemple par exemple si elle dépasse 10% du nombre total de paquets radio reçus par un dispositif.

Selon une possibilité, le dispositif de communication primaire Prim reçoit une information de RSSI en plus de l'information BER en provenance de l'au moins un dispositif de communication secondaire.

Selon une possibilité, le système de radiocommunication S peut contenir une pluralité de dispositifs de communication primaires.

### Mise à jour des groupes de fréquences porteuses

Le dispositif de communication primaire Prim et/ou l'au moins un dispositif de communication secondaire Sec sont à même d'identifier, de manière autonome, autrement dit sans aucune intervention extérieure au système de radiocommunication S, notamment celle d'un opérateur, lorsque la transmission d'un signal sur la fréquence porteuse fp est perturbée.

Au sens de l'invention, les paquets radio contenant la donnée applicative A sont appelés paquets radio applicatifs.

Chaque dispositif de communication évalue la qualité du signal qui lui est transmis par un autre dispositif et calcule l'information PER relative à la qualité de la transmission de la donnée applicative A de deux façons différentes :
- Un calcul instantané (d'environ une seconde pour un signal audio par exemple) :
   lorsqu'un taux d'erreur de 20% par exemple pour les paquets radio applicatifs transmis est mesuré, une demande de sélection d'une nouvelle fréquence porteuse applicative est générée
- Un calcul de long terme (d'environ dix secondes pour un signal audio par exemple) :
   lorsqu'un taux d'erreur de 10% par exemple pour les paquets radio applicatifs transmis est mesuré, une demande de sélection d'une nouvelle fréquence porteuse applicative est générée

### Attribution d'une note

L'étape d'extraction SP4 du sous-groupe de fréquences porteuses P2 va être à présent décrite de façon plus détaillée selon un exemple de mise en oeuvre. Cette étape comporte en outre les sous-étapes suivantes :
- Attribution SP4-1 d'une note partielle pour chaque dispositif de communication secondaire Sec compris dans le groupe de dispositifs de communication secondaires pour l'au moins une fréquence porteuse fp comprise dans le groupe de fréquences porteuses P1 à partir de l'information BER relative à la qualité du lien de communication sur ladite fréquence porteuse fp reçue en provenance dudit dispositif de communication secondaire Sec;
- Détermination SP4-2 d'une note globale pour l'au moins une fréquence porteuse fp comprise dans le groupe de fréquences porteuses P1 à partir d'une pluralité de notes partielles pour la fréquence porteuse fp obtenue pour une pluralité de dispositif de communication secondaire compris dans le groupe de dispositifs de communication secondaires ;
- Classement SP4-3 de l'au moins une fréquence porteuse fp dans le sous-groupe de fréquences porteuses P2 sur la base de la note globale pour l'au moins une fréquence porteuse fp.

Selon une possibilité, le sous-groupe de fréquences porteuses P2 contient un nombre de fréquences porteuses inférieur ou égal au nombre de fréquences porteuses contenues dans le groupe de fréquences porteuses P1.

En d'autres termes, l'au moins une fréquence porteuse fp peut être ajoutée ou supprimée du sous-groupe de fréquences porteuses P2 en fonction de la note globale pour ladite au moins une fréquence porteuse fp.

Par ailleurs, l'étape de détermination d'une note globale pour une fréquence peut comprendre une étape d'exclusion d'au moins un dispositif de communication secondaire Sec sur la base de la note partielle attribuée pour le calcul de la note globale pour l'au moins une fréquence porteuse fp comprise dans le groupe de fréquences porteuses P1.

Selon ces dispositions, un dispositif de communication secondaire Sec qui présente une mauvaise note pour toutes les fréquences porteuses est exclu du calcul ou de la détermination du calcul de la note globale.

Lors de la transmission d'un signal, une note globale est attribuée à une fréquence porteuse en fonction des pertes de paquets radio sur ladite fréquence porteuse ainsi que de la durée de ces pertes.

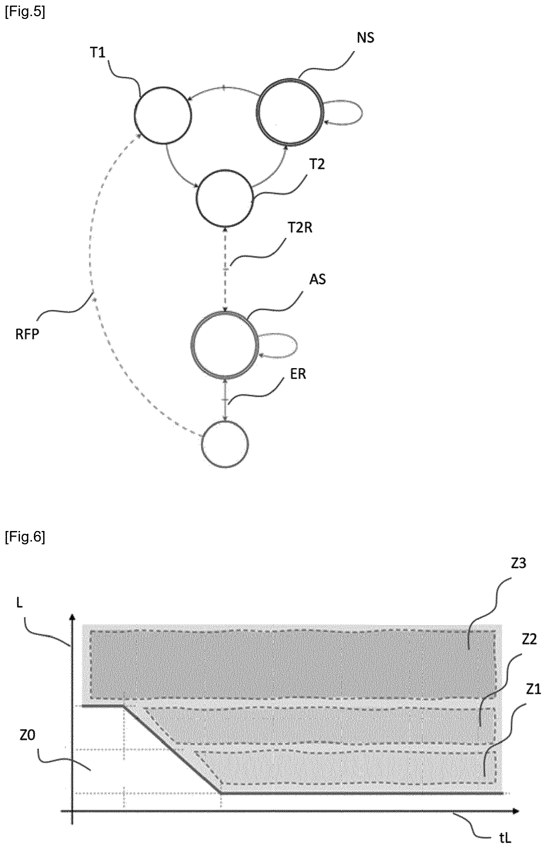

La figure 6 présente un exemple d'attribution de la note globale pour une fréquence porteuse donnée.

Des fréquences porteuses F1, F2, F3, F4 sont triées en fonction de la note globale qui leur est attribuée dans [Tab.1]: plus la note d'une fréquence porteuse est élevée, moins il est recommandé de sélectionner cette fréquence porteuse pour la transmission du signal.

Les fréquences porteuses pour lesquelles une note de 0 est attribuée peuvent être employées en priorité.

La figure 6 est un graphique qui présente une sévérité des pertes L de paquets radio PR en fonction d'une durée tL durant laquelle sont observées ces pertes, ainsi qu'un système d'attribution d'une note partielle pour une fréquence porteuse donnée : une zone Z3 du graphique équivaut à une note partielle de 3, une zone Z2 à une note partielle de 2, une zone Z1 à une note partielle de 1 et une zone Z0 à une note partielle de 0. Une note partielle de 0 pour une fréquence porteuse donnée indique que la fréquence fp peut être privilégiée pour la transmission du signal.

Les notes globales des fréquences porteuses sont concentrées par le dispositif de communication primaire Prim en vue de sélectionner une fréquence porteuse pour la transmission du signal.

Avant le calcul de la note globale pour chaque fréquence porteuse, une note partielle est attribuée à chaque dispositif de communication secondaire compris dans le groupe de dispositifs secondaires.

Lors du calcul de la note globale pour chaque fréquence porteuse, un dispositif de communication secondaire présentant une note partielle insuffisante sur chaque fréquence porteuse est exclu du calcul de la note globale de chaque fréquence porteuse.

Le tableau [Tab.1] présente un exemple d'attribution de la note globale pour les fréquences porteuses F1, F2, F3 et F4 pour des dispositifs de communication secondaires Sec1, Sec2, Sec3, Sec4 et Sec5.

**[Tab.1]**

| N. du dispositif | Score / canal | | | | |
|---|---|---|---|---|---|
| | **F1** | **F2** | **F3** | **F4** | **Note globale / dispositif** |
| **Sec1** | 0 | 1 | 1 | 2 | **¼ >=2** |
| **Sec2** | 0 | 0 | 2 | 3 | **2/4 >= 2** |
| **Sec3** | 0 | 1 | 1 | 3 | **¼ >= 2** |
| **Sec4** | 0 | 1 | 2 | 2 | **2/4 >= 2** |
| **Sec5** | 3 | 3 | 3 | 3 | **4/4 fréquences >= 2** |
| **Note globale / canal** | **0** | **¾** | **6/4 > 1** | **10/4 > 1** | |

Les fréquences porteuses F1, F2, F3, F4 sont triées en fonction de leur note globale : Lorsqu'une fréquence porteuse est jugée inutilisable, une demande de tri P2R est lancée. Les fréquences porteuses pour lesquelles une analyse est en cours en vue de leur attribuer une note globale sont intégrés à un groupe de fréquences porteuses P1. Les fréquences porteuses pour lesquelles la note globale est supérieure à 1 ne sont pas proposés pour la transmission du signal.

Les fréquences porteuses F1 et F2 pour lesquelles les notes globales les moins élevées ont été attribuées sont choisies par le dispositif de communication primaire pour l'envoi de la donnée applicative A. F1 et F2 sont alors intégrées au sous-groupe de fréquences porteuses P2.

Selon un exemple, on considère le cas où le système de radiocommunication S analyse quatre fréquences f1, f2, f3, f4 contenues dans des bandes de fréquences autorisées par la législation en vigueur, par exemple les bandes de fréquences ISM. L'envoi d'information au sein du système S débute aléatoirement sur l'une de ces fréquences, par exemple f1, parce qu'un utilisateur a pris la décision de ne pas choisir une fréquence spécifique.

Avant même qu'un envoi d'information n'ait lieu entre les dispositifs de communication, une analyse des bandes fréquentielles a lieu.

Cette analyse continue tant que les dispositifs sont mis en marche.

Ainsi le système S comprend, à tout moment, quelles sont les fréquences parmi f1, f2, f3 et f4 qui sont exploitables au cas où la fréquence utilisée serait à modifier.

Lors des phases d'envoi de la donnée applicative A, chaque dispositif de communication mesure la qualité du lien radio entre lui-même et les dispositifs qui transmettent :
Un diagnostic de l'information BER est fait en permanence et un diagnostic de l'information PER lors de l'envoi de la donnée applicative A.

Si le résultat du diagnostic de l'information PER n'est pas acceptable, la communication entre les dispositifs du système S est perturbée, et ainsi la décision peut être prise de basculer de f1 à f2, f3 ou f4 : le choix étant donné par le meilleur résultat du diagnostic de l'information BER :
- Ce basculement est piloté par le dispositif de communication primaire qui propage un ordre aux autres dispositifs.
- En pratique, l'information PER qui déclenche le basculement du fonctionnement du système S sur une fréquence différente sera choisie pour ne pas générer des changements intempestifs, tout en étant assez sensible pour ne pas autoriser une importante dégradation de l'envoi de la donnée applicative A. Par exemple, une information PER calculée qui dépasse 5% sur plus de 10 secondes de communication consécutives constitue un compromis acceptable.

Dans le cas où la donnée applicative A est un signal audio par exemple, l'information PER calculée peut avoir une valeur allant jusqu'à 5% ou 10%, et des mécanismes de traitement audio de type « packet loss concealment » permettent de maintenir une qualité audio satisfaisante. Des perturbations relatives à l'information PER ayant la valeur de jusqu'à 5% ou 10% témoignent d'un encombrement radiofréquence, signe d'une cohabitation dans le canal utilisé.

### Machine d'Etat

La figure 5 est une représentation du procédé décrit en référence à la figure 4 sous forme d'une machine d'état.

Ainsi, un état actif par défaut dudit procédé de radiocommunication est celui d'une analyse du réseau de communication NS.

Durant l'état NS, le dispositif de communication primaire Prim envoie régulièrement le paquet d'informations B sur une pluralité de fréquences porteuses, et l'au moins un dispositif de communication secondaire Sec évalue la qualité des paquets radio reçus du dispositif de communication primaire Prim sur chaque fréquence porteuse.

L'état NS correspond à une exécution des étapes SP1 à SP4 par le dispositif de communication primaire Prim.

Dans la figure 5, un état T1 représente la sélection de la pluralité de fréquences porteuses constituant le groupe de fréquences porteuses P1, et un état T2 représente une sélection d'une pluralité de fréquences porteuses applicatives pour constituer le sous-groupe de fréquences porteuses P2 et correspondant à une exécution de l'étape SP4.

Une transition T2R représente une sélection d'une fréquence porteuse applicative fpa pour la transmission de la donnée applicative A et correspond à l'exécution des étapes SP6 et SP7 de la figure 4.

Un état AS est un état d'analyse des paquets radio applicatifs. L'état AS correspond à l'exécution des étapes SS6, SS7 par l'au moins un dispositif de communication secondaire Sec et à l'exécution des étapes SP8, SP9 et SP9' par le dispositif de communication primaire Prim.

Enfin, lors d'une demande ER de changement de fréquence porteuse applicative fpa, la fréquence fpa refusée est repositionnée dans le groupe de fréquences porteuses P1 lors d'une transition RFP et un nouveau jeu de fréquences porteuses est sélectionné dans le sous-groupe de fréquences porteuses P2. Cet état correspond à l'exécution des étapes SP4 et SP5 ou SP11 par le dispositif de communication primaire Prim.

### Mécanisme de rôle adaptatif

Dans l'éventualité où aucun canal n'est complètement libre de perturbations, le système de radiocommunication S intègre une capacité à survivre aux perturbations.

Au sens de l'invention, une résilience du système de radiocommunication S désigne une résistance du système S aux perturbations radio, autrement dit le système de radiocommunication S permet aux dispositifs de communication d'exploiter tous les paquets radio transmis même si les paquets radio transmis possèdent une valeur insuffisante de l'information PER.

Selon une possibilité, le procédé de radiocommunication décrit adapte une utilisation d'une bande passante pour la transmission d'un signal de façon à améliorer la résilience du système de radiocommunication S aux perturbations radio.

Selon une possibilité, le procédé de radiocommunication décrit inclue une hiérarchisation H1 du dispositif de communication primaire Prim et de l'au moins un dispositif de communication secondaire Sec, une priorisation H2 pour la transmission de la donnée applicative A sur la fréquence porteuse applicative fpa sur la base de la hiérarchisation pour désigner un dispositif de communication prioritaire, une transmission H3 de la donnée applicative A sur la fréquence porteuse applicative fpa par une pluralité de paquets radio PR avec une redondance de la donnée applicative A transmise par dispositif de communication prioritaire.

Le dispositif de communication prioritaire peut par exemple désigner le dispositif de communication utilisé par un arbitre central lors d'une rencontre sportive.

A titre d'exemple, au cours d'un évènement sportif, certains dispositifs de communication peuvent avoir un rôle plus important que d'autres, notamment dans la gestion d'une équipe, et donc lesdits dispositifs de communication sont hiérarchisés en fonction de l'importance de leur rôle.

Lorsqu'un dispositif de communication occupe un rôle important, on dit qu'il possède un rôle privilégié.

Le dispositif de communication ayant un rôle privilégié possède un droit de préemption dans la transmission d'un signal et une priorité au sein du système de radiocommunication S.

Ainsi afin de garantir le droit de préemption du rôle privilégié au sein du système de radiocommunication S, une allocation de la pluralité de paquets radio PR pour la transmission de la donnée applicative A sur la fréquence porteuse applicative fpa sur la base de la priorisation des dispositifs de communication est effectuée.

Le dispositif de communication ayant un rôle privilégié peut transmettre la donnée applicative A par exemple le signal audio avec une redondance d'information, également appelée redondance conditionnelle.

Il existe différents algorithmes de mise en oeuvre de la redondance conditionnelle, par exemple :
1. Une répétition de l'information contenue dans un paquet radio compris dans la pluralité de paquets radio PR et transmise au sein du même cycle radio CR, dans un paquet radio différent et sur la même fréquence porteuse fp.
2. Une répétition de l'information contenue dans un paquet radio compris dans la pluralité de paquets radio PR et transmise au sein du même cycle radio CR, dans un paquet radio différent et sur une fréquence porteuse différente.
3. Une utilisation de la pluralité de paquets radio PR consécutifs pour la transmission d'une information contenant préalablement de la redondance d'information.

L'algorithme de mise en oeuvre de la redondance conditionnelle peut être sélectionné en fonction d'une nature des perturbations radio.

Lors de la mise en oeuvre de la redondance conditionnelle, des paquets radio qui contiennent une information transmise redondante sont sélectionnés parmi des paquets radio ne contenant aucune information à transmettre.

### Mécanisme distant de maintien en conditions opérationnelles

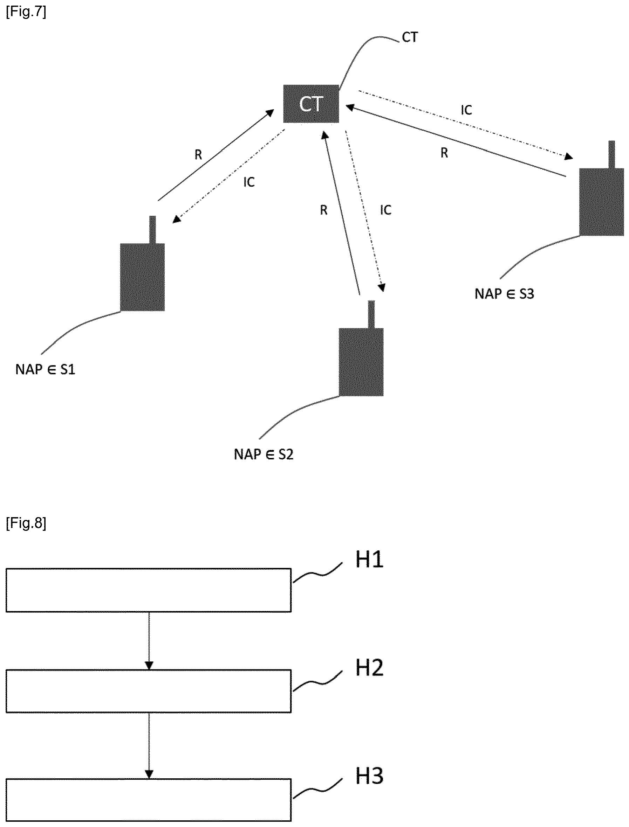

Il est possible d'implémenter pour le système de radiocommunication S, comme à la figure 7, un procédé de gestion d'un fonctionnement mettant en oeuvre le procédé de radiocommunication décrit.

Selon une possibilité, le système de radiocommunication comprend un centre de contrôle CT et un dispositif de renseignement NAP.

Selon une possibilité, le dispositif de renseignement NAP crée un serveur, accessible en local par exemple depuis une enceinte d'un stade de football ou bien à distance par exemple depuis le centre de contrôle CT.

Le serveur met à disposition des renseignements sur un état du système de radiocommunication S, autrement dit une information R relative au fonctionnement du système de radiocommunication S, par exemple une durée de vie des batteries, un volume sonore d'un casque audio, un type de casque audio utilisé, une qualité audio, une présence de perturbateurs radio etc. et permet au centre de contrôle CT de vérifier un bon fonctionnement du système de radiocommunication S.

En cas de problème, le centre de contrôle CT est en mesure de changer une configuration des dispositifs de communication à distance, par exemple en forçant une utilisation d'une fréquence porteuse différente pour le signal à transmettre.

Ainsi, le procédé de gestion d'un fonctionnement du système de radiocommunication S entre le dispositif de communication primaire Prim et l'au moins un dispositif de communication secondaire Sec comprend les étapes suivantes :
- Réception CP1' d'une information R relative au fonctionnement du système de radiocommunication S par le centre de contrôle CT;
- Envoi CP2' d'une information IC relative à une opération de gestion du système de radiocommunication S sur la base de l'information R relative au fonctionnement du système de radiocommunication S en vue d'une modification CP3' du fonctionnement du dispositif de radiocommunication primaire Prim et/ou du groupe de dispositifs de communication secondaires Sec sur la base de l'information IC.

L'information R relative au fonctionnement du système de radiocommunication peut être reçue en provenance du dispositif de renseignements NAP appartenant au système de radiocommunication.

L'objectif du procédé de gestion décrit est de permettre au centre de contrôle CT de gérer plusieurs systèmes de radiocommunication S1, S2, S3 en agissant à distance pour résoudre d'éventuels problèmes au sein desdits systèmes de radiocommunication.

Selon une possibilité, le procédé de gestion décrit présente une fonctionnalité de notes automatiques et manuelles dite de « reporting », pour reconstituer un déroulement d'une scène, notamment une scène d'un évènement sportif.

Selon une possibilité, le serveur peut intégrer des algorithmes de traitement de données, par exemple des algorithmes utilisant des approches par apprentissage machine, afin de traiter d'importantes quantités de données relatives à diverses caractéristiques du système de radiocommunication.

Selon une possibilité, le système S ne fonctionne pas sur des fréquences utilisées par certains clubs sportifs pour leurs systèmes de communication spécifiques.

Selon une possibilité, le système S ne fonctionne pas sur des fréquences à priori inutilisables dans certains stades.

Selon une possibilité, le procédé de gestion du fonctionnement du système de radiocommunication S permet de déclencher un diagnostic périodique de l'information PER, et un son d'alerte dans le cas où un problème a lieu.

A titre d'exemple, le système de radiocommunication S et le procédé de radiocommunication décrit peuvent avoir pour application de permettre à des équipes de parler entre elles, avec une bonne qualité audio et ce, même dans des environnements sonores extrêmement bruyants. En particulier, dans le domaine sportif, le procédé de radiocommunication et le système de radiocommunication S décrits permettent d'équiper des arbitres, des entraîneurs et des médecins dans leur mission où la prise de décision est mutualisée, rapide, sans équivoque et s'effectue la plupart du temps sous pression et dans un environnement bruyant (>90dBSPL).

## Revendications

1. Procédé de radiocommunication entre un dispositif de communication primaire (Prim) et au moins un dispositif de communication secondaire (Sec), le dispositif primaire (Prim) pouvant être configuré pour devenir dispositif secondaire et inversement, le procédé utilisant une fréquence porteuse applicative (fpa) pour la transmission d'une donnée applicative (A), le procédé étant exécuté par le dispositif de communication primaire (Prim) et comprenant les étapes suivantes :
• Réception (SP2) d'une information BER relative à une qualité d'un lien de communication sur au moins une fréquence porteuse réseau (fp) comprise dans un groupe de fréquences porteuses (P1) en provenance de l'au moins un dispositif de communication secondaire (Sec);
• Réalisation (SP3) d'un diagnostic de communication à partir de l'information BER relative à la qualité du lien de communication sur l'au moins une fréquence porteuse réseau (fp);
• Extraction (SP4) d'un sous-groupe de fréquences porteuses (P2) susceptibles de devenir des fréquences porteuses applicatives et de porter un signal à transmettre à partir du groupe de fréquences porteuses (P1) ;
• Sélection (SP5) de la fréquence porteuse applicative (fpa) dans le sous-groupe de fréquences porteuses (P2);
• Etablissement (SP6) d'une communication applicative (Com) entre le dispositif de communication primaire (Prim) et l'au moins un dispositif de communication secondaire (Sec) sur la fréquence porteuse applicative (fpa).

2. Procédé selon la revendication 1, comprenant en outre l'étape suivante :
• Envoi (SP1) d'un paquet d'informations (B) sur l'au moins une fréquence porteuse (fp) comprise dans le groupe de fréquences porteuses (P1) par le dispositif de communication primaire (Prim) vers l'au moins un dispositif de communication secondaire (Sec) ;

3. Procédé selon l'une des revendications 1 ou 2 dans lequel la radiocommunication est réalisée entre un dispositif de communication primaire (Prim) et un groupe de dispositifs de communication secondaires, l'extraction (SP4) du sous-groupe de fréquences porteuses (P2) se faisant selon les étapes suivantes :
• Attribution (SP4-1) d'une note partielle pour chaque dispositif de communication secondaire (Sec) compris dans le groupe de dispositifs de communication secondaires pour l'au moins une fréquence porteuse (fp) comprise dans le groupe de fréquences porteuses (P1) à partir de l'information BER relative à la qualité du lien de communication sur ladite fréquence porteuse (fp) reçue en provenance dudit dispositif de communication secondaire (Sec);
• Détermination (SP4-2) d'une note globale pour l'au moins une fréquence porteuse (fp) comprise dans le groupe de fréquences porteuses (P1) à partir d'une pluralité de notes partielles pour la fréquence porteuse (fp) obtenue pour une pluralité de dispositif de communication secondaire compris dans le groupe de dispositifs de communication secondaires ;
• Classement (SP4-3) de l'au moins une fréquence porteuse (fp) dans le sous-groupe de fréquences porteuses (P2) sur la base de la note globale pour l'au moins une fréquence porteuse (fp).

4. Procédé selon la revendication 3, dans lequel l'étape de détermination (SP4-2) d'une note globale pour une fréquence comprend l'étape suivante :
• Exclusion d'au moins un dispositif de communication secondaire (Sec) sur la base de la note partielle attribuée pour le calcul de la note globale pour l'au moins une fréquence porteuse (fp) comprise dans le groupe de fréquences porteuses (P1);

5. Procédé selon l'une quelconque des revendications précédentes, comprenant en outre les étapes suivantes :
• Calcul (SP9') d'une information PER relative à la qualité de la transmission de la donnée applicative (A) émise par l'au moins un dispositif de communication secondaire (Sec) sur la fréquence porteuse applicative (fpa) et/ou
• Réception (SP8) de l'information PER relative à la qualité de la transmission de la donnée applicative (A) émise par le dispositif de communication primaire (Prim) sur la fréquence porteuse applicative (fpa), en provenance de l'au moins un dispositif de communication secondaire (Sec);
• Réalisation (SP10) d'un diagnostic applicatif sur la fréquence porteuse applicative (fpa) à partir de l'information PER relative à la qualité de la transmission de la donnée applicative (A) sur la fréquence porteuse applicative (fpa);
• Mise à jour (SP11) du sous-groupe de fréquences porteuses (P2) à partir du diagnostic applicatif sur la fréquence porteuse applicative (fpa) ;
Les étapes suivantes du procédé étant à nouveau réalisées :
• Sélection (SP5) de la fréquence porteuse applicative (fpa) dans le sous-groupe de fréquences porteuses (P2);
• Etablissement (SP6) d'une communication applicative (Com) entre le dispositif de communication primaire (Prim) et l'au moins un dispositif de communication secondaire (Sec) sur la fréquence porteuse applicative (fpa).

6. Procédé de radiocommunication entre un dispositif de communication primaire (Prim) et au moins un dispositif de communication secondaire (Sec), le dispositif primaire (Prim) pouvant être configuré pour devenir dispositif secondaire et inversement, le procédé utilisant une fréquence porteuse applicative (fpa) pour la transmission d'une donnée applicative (A), le procédé étant exécuté par l'au moins un dispositif de communication secondaire (Sec) et comprenant les étapes suivantes :
• Elaboration (SS3) d'une information BER relative à une qualité d'un lien de communication sur au moins une fréquence porteuse (fp) comprise dans un groupe de fréquences porteuses (P1) à transmettre au dispositif de communication primaire (Prim);
• Envoi (SS4) de l'information BER relative à la qualité du lien de communication sur au moins une fréquence porteuse (fp) comprise dans le groupe de fréquences porteuses (P1) au dispositif de communication primaire (Prim).

7. Procédé selon la revendication 6 comprenant en outre les étapes de :
• Réception (SS1) d'un paquet d'informations (B) sur l'au moins une fréquence porteuse (fp) comprise dans le groupe de fréquences porteuses (P1) en provenance du dispositif de communication primaire (Prim) ;
• Configuration (SS2) de l'au moins un dispositif de communication secondaire (Sec) sur la base du paquet d'informations (B) sur l'au moins une fréquence porteuse comprise dans le groupe de fréquences porteuses (P1) en provenance du dispositif de communication primaire (Prim);
• Synchronisation (SS2') de l'au moins un dispositif de communication secondaire (Sec) au dispositif de communication primaire (Prim) sur la base du paquet d'informations (B) sur l'au moins une fréquence porteuse (fp) comprise dans le groupe de fréquences porteuses (P1) en provenance du dispositif de communication primaire (Prim).

8. Procédé selon la revendication 6 ou 7 comprenant en outre les étapes de :
• Calcul (SS6) d'une information PER relative à une qualité d'une transmission d'une donnée applicative (A) émise par l'au moins un dispositif de communication secondaire (Sec) sur la fréquence porteuse applicative (fpa);
• Envoi (SS7) de l'information PER relative à la qualité de la transmission de la donnée applicative (A) émise par l'au moins un dispositif de communication secondaire (Sec) sur la fréquence porteuse applicative (fpa) au dispositif de communication primaire (Prim).

9. Procédé de radiocommunication selon l'une des revendications 1 à 5 entre le dispositif de communication primaire (Prim) et l'au moins un dispositif de communication secondaire (Sec), le procédé utilisant une fréquence porteuse applicative (fpa) pour une transmission d'une donnée applicative (A), la transmission de la donnée applicative (A) se faisant par une pluralité de paquets radio (PR), le procédé étant exécuté par le dispositif de communication primaire (Prim) et comprenant les étapes suivantes:
• Une hiérarchisation (H1) du dispositif de communication primaire (Prim) et de l'au moins un dispositif de communication secondaire (Sec) ;
• Une priorisation (H2) pour la transmission de la donnée applicative (A) sur la fréquence porteuse applicative (fpa) sur la base de la hiérarchisation pour désigner un dispositif de communication prioritaire ;
• Une transmission (H3) de la donnée applicative (A) sur la fréquence porteuse applicative (fpa) par une pluralité de paquets radio (PR) avec une redondance de la donnée applicative (A) transmise par dispositif de communication prioritaire.

10. Procédé de gestion d'un fonctionnement d'un système de radiocommunication (S) entre un dispositif de communication primaire (Prim) et au moins un dispositif de communication secondaire (Sec), le dispositif primaire (Prim) pouvant être configuré pour devenir dispositif secondaire et inversement, le dispositif de communication primaire (Prim) mettant en oeuvre un procédé de radiocommunication selon l'une des revendications 1 à 5 ou 9 et/ou le dispositif de communication secondaire (Sec) mettant en oeuvre un procédé de radiocommunication selon l'une des revendications 6 à 8, le système comprenant un centre de contrôle (CT), le procédé étant exécuté par le centre de contrôle (CT) et comprenant les étapes suivantes :
• Réception (CP1') d'une information (R) relative au fonctionnement du système de radiocommunication (S) par le centre de contrôle (CT) ;
• Envoi (CP2') d'une information (IC) relative à une opération de gestion du système de radiocommunication (S) sur la base de l'information (R) relative au fonctionnement du système de radiocommunication (S) en vue d'une modification (CP3') du fonctionnement du dispositif de radiocommunication primaire (Prim) et/ou du groupe de dispositifs de communication secondaires (Sec) sur la base de l'information (IC).

11. Procédé selon la revendication 10, dans lequel l'information (R) relative au fonctionnement du système de radiocommunication (S) est reçue en provenance d'un dispositif de renseignements (NAP) appartenant au système de radiocommunication (S).

## Patentansprüche

1. Verfahren zur Funkkommunikation zwischen einer primären Kommunikationsvorrichtung (Prim) und mindestens einer sekundären Kommunikationsvorrichtung (Sec), wobei die primäre Vorrichtung (Prim) konfiguriert werden kann, um zur sekundären Vorrichtung zu werden und umgekehrt, wobei das Verfahren eine Anwendungsträgerfrequenz (fpa) zur Übertragung von Anwendungsdaten (A) verwendet, wobei das Verfahren von der primären Kommunikationsvorrichtung (Prim) ausgeführt wird und die folgenden Schritte umfasst:
- Empfangen (SP2) einer Information BER bezüglich einer Qualität einer Kommunikationsverbindung auf mindestens einer Netzträgerfrequenz (fp), die in einer Gruppe von Trägerfrequenzen (P1) enthalten ist, die von der mindestens einen sekundären Kommunikationsvorrichtung (Sec) stammen;
- Durchführen (SP3) einer Kommunikationsdiagnose ausgehend von der Information BER bezüglich der Qualität der Kommunikationsverbindung auf mindestens einer Netzträgerfrequenz (fp);
- Extrahieren (SP4) einer Untergruppe von Trägerfrequenzen (P2), die zu Anwendungsträgerfrequenzen werden können und ein zu übertragendes Signal ausgehend von der Gruppe von Trägerfrequenzen (P1) tragen können;
- Auswählen (SP5) der Anwendungsträgerfrequenz (fpa) in der Untergruppe der Trägerfrequenzen (P2);
- Einrichten (SP6) einer Anwendungskommunikation (Com) zwischen der primären Kommunikationsvorrichtung (Prim) und der mindestens einen sekundären Kommunikationsvorrichtung (Sec) auf der Anwendungsträgerfrequenz (fpa).

2. Verfahren nach Anspruch 1, ferner den folgenden Schritt umfassend:
- Senden (SP1) eines Informationspakets (B) auf der mindestens einen Trägerfrequenz (fp), die in der Gruppe von Trägerfrequenzen (P1) enthalten ist, durch die primäre Kommunikationsvorrichtung (Prim) an die mindestens eine sekundäre Kommunikationsvorrichtung (Sec).

3. Verfahren nach einem der Ansprüche 1 oder 2, wobei die Funkkommunikation zwischen einer primären Kommunikationsvorrichtung (Prim) und einer Gruppe sekundärer Kommunikationsvorrichtungen durchgeführt wird, wobei die Extraktion (SP4) der Untergruppe von Trägerfrequenzen (P2) gemäß den folgenden Schritten erfolgt:
- Zuweisen (SP4-1) einer Teilbewertung für jede sekundäre Kommunikationsvorrichtung (Sec), die in der Gruppe der sekundären Kommunikationsvorrichtungen enthalten ist, für die mindestens eine Trägerfrequenz (fp), die in der Gruppe der Trägerfrequenzen (P1) enthalten ist, ausgehend von der Information BER bezüglich der Qualität der Kommunikationsverbindung auf der Trägerfrequenz (fp), die von der sekundären Kommunikationsvorrichtung (Sec) stammend empfangen wird;
- Bestimmen (SP4-2) einer Gesamtbewertung für die mindestens eine Trägerfrequenz (fp), die in der Gruppe der Trägerfrequenzen (P1) enthalten ist, ausgehend von einer Vielzahl von Teilbewertungen für die Trägerfrequenz (fp), die für eine Vielzahl von sekundären Kommunikationsvorrichtungen erhalten wurde, die in der Gruppe der sekundären Kommunikationsvorrichtungen enthalten ist;
- Einstufen (SP4-3) der mindestens einen Trägerfrequenz (fp) in der Untergruppe der Trägerfrequenzen (P2) auf der Grundlage der Gesamtbewertung für die mindestens eine Trägerfrequenz (fp).

4. Verfahren nach Anspruch 3, wobei der Schritt zur Bestimmung (SP4-2) einer Gesamtbewertung für eine Frequenz den folgenden Schritt umfasst:
- Ausschließen von mindestens einer sekundären Kommunikationsvorrichtung (Sec) auf der Grundlage der Teilbewertung, die für die Berechnung der Gesamtbewertung für die mindestens eine Trägerfrequenz (fp) zugewiesen wurde, die in der Gruppe der Trägerfrequenzen (P1) enthalten ist.

5. Verfahren nach einem der vorhergehenden Ansprüche, ferner die folgenden Schritte umfassend:
- Berechnen (SP9') einer Information PER bezüglich der Qualität der Übertragung der Anwendungsdaten (A), die von mindestens einer sekundären Kommunikationsvorrichtung (Sec) auf der Anwendungsträgerfrequenz (fpa) emittiert werden, und/oder
- Empfangen (SP8) der Information PER bezüglich der Qualität der Übertragung der Anwendungsdaten (A), die von der primären Kommunikationsvorrichtung (Prim) auf der Anwendungsträgerfrequenz (fpa) emittiert werden, von der mindestens einen sekundären Kommunikationsvorrichtung (Sec) stammend;
- Durchführen (SP10) einer Anwendungsdiagnose auf der Anwendungsträgerfrequenz (fpa) ausgehend von der Information PER bezüglich der Qualität der Übertragung der Anwendungsdaten (A) auf der Anwendungsträgerfrequenz (fpa);
- Aktualisieren (SP11) der Untergruppe der Trägerfrequenzen (P2) ausgehend von der Anwendungsdiagnose auf der Anwendungsträgerfrequenz (fpa);
wobei die folgenden Schritte des Verfahrens erneut durchgeführt werden:
- Auswählen (SP5) der Anwendungsträgerfrequenz (fpa) in der Untergruppe der Trägerfrequenzen (P2);
- Einrichten (SP6) einer Anwendungskommunikation (Com) zwischen der primären Kommunikationsvorrichtung (Prim) und der mindestens einen sekundären Kommunikationsvorrichtung (Sec) auf der Anwendungsträgerfrequenz (fpa).

6. Verfahren zur Funkkommunikation zwischen einer primären Kommunikationsvorrichtung (Prim) und mindestens einer sekundären Kommunikationsvorrichtung (Sec), wobei die primäre Vorrichtung (Prim) konfiguriert werden kann, um zur sekundären Vorrichtung zu werden und umgekehrt, wobei das Verfahren eine Anwendungsträgerfrequenz (fpa) zur Übertragung von Anwendungsdaten (A) verwendet, wobei das Verfahren von mindestens einer sekundären Kommunikationsvorrichtung (Sec) ausgeführt wird und die folgenden Schritte umfasst:
- Erstellen (SS3) einer Information BER bezüglich einer Qualität einer Kommunikationsverbindung auf mindestens einer Trägerfrequenz (fp), die in einer Gruppe von Trägerfrequenzen (P1) enthalten ist, die an die primäre Kommunikationsvorrichtung (Prim) zu übertragen ist;
- Senden (SS4) der Informationen BER bezüglich der Qualität der Kommunikationsverbindung auf mindestens einer Trägerfrequenz (fp), die in der Gruppe von Trägerfrequenzen (P1) enthalten ist, an die primäre Kommunikationsvorrichtung (Prim).

7. Verfahren nach Anspruch 6, ferner die Schritte umfassend:
- Empfangen (SS1) eines Informationspakets (B) auf der mindestens einen Trägerfrequenz (fp), die in der Gruppe von Trägerfrequenzen (P1) von der primären Kommunikationsvorrichtung (Prim) stammend enthalten ist;
- Konfigurieren (SS2) der mindestens einen sekundären Kommunikationsvorrichtung (Sec) auf der Grundlage des Informationspakets (B) auf der mindestens einen Trägerfrequenz, die in der Gruppe der Trägerfrequenzen (P1) von der primären Kommunikationsvorrichtung (Prim) stammend enthalten ist;
- Synchronisieren (SS2') der mindestens einen sekundären Kommunikationsvorrichtung (Sec) mit der primären Kommunikationsvorrichtung (Prim) auf der Grundlage des Informationspakets (B) auf der mindestens einen Trägerfrequenz (fp), die in der Gruppe der Trägerfrequenzen (P1) von der primären Kommunikationsvorrichtung (Prim) stammend enthalten ist.

8. Verfahren nach Anspruch 6 oder 7, ferner die Schritte umfassend:
- Berechnen (SS6) einer Information PER bezüglich einer Qualität einer Übertragung von Anwendungsdaten (A), die von mindestens einer sekundären Kommunikationsvorrichtung (Sec) auf der Anwendungsträgerfrequenz (fpa) emittiert werden;
- Senden (SS7) der Informationen PER bezüglich der Qualität der Übertragung der Anwendungsdaten (A), die von der mindestens einen sekundären Kommunikationsvorrichtung (Sec) auf der Anwendungsträgerfrequenz (fpa) an die primäre Kommunikationsvorrichtung (Prim) emittiert werden.

9. Verfahren zur Funkkommunikation, nach einem der Ansprüche 1 bis 5, zwischen der primären Kommunikationsvorrichtung (Prim) und der mindestens einen sekundären Kommunikationsvorrichtung ( Sec), wobei das Verfahren eine Anwendungsträgerfrequenz (fpa) für eine Übertragung von Anwendungsdaten (A) verwendet, wobei die Übertragung der Anwendungsdaten (A) über eine Vielzahl von Funkpaketen (PR) erfolgt, wobei das Verfahren von der primären Kommunikationsvorrichtung (Prim) ausgeführt wird und die folgenden Schritte umfasst:
- eine Hierarchisierung (H1) der primären Kommunikationsvorrichtung (Prim) und der mindestens einen sekundären Kommunikationsvorrichtung (Sec);
- eine Priorisierung (H2) für die Übertragung der Anwendungsdaten (A) auf der Anwendungsträgerfrequenz (fpa) auf der Grundlage der Hierarchisierung, um eine prioritäre Kommunikationsvorrichtung zu bezeichnen;
- eine Übertragung (H3) der Anwendungsdaten (A) auf der Anwendungsträgerfrequenz (fpa) durch eine Vielzahl von Funkpaketen (PR) mit einer Redundanz der Anwendungsdaten (A), die durch eine prioritäre Kommunikationsvorrichtung übertragen werden.

10. Verfahren zur Verwaltung eines Betriebs eines Systems zur Funkkommunikation (S) zwischen einer primären Kommunikationsvorrichtung (Prim) und mindestens einer sekundären Kommunikationsvorrichtung (Sec), wobei die primäre Vorrichtung (Prim) konfiguriert werden kann, um zur sekundären Vorrichtung zu werden und umgekehrt, wobei die primäre Kommunikationsvorrichtung (Prim) ein Verfahren zur Funkkommunikation nach einem der Ansprüche 1 bis 5 oder 9 implementiert, und/oder die sekundäre Kommunikationsvorrichtung (Sec) ein Verfahren zur Funkkommunikation nach einem der Ansprüche 6 bis 8 implementiert, wobei das System ein Kontrollzentrum (CT) umfasst, wobei das Verfahren vom Kontrollzentrum (CT) ausgeführt wird und die folgenden Schritte umfasst:
- Empfangen (CP1') von Informationen (R) bezüglich dem Betrieb des Funkkommunikationssystems (S) durch das Kontrollzentrum (CT);
- Senden (CP2') einer Information (IC) bezüglich eines Verwaltungsvorgangs des Funkkommunikationssystems (S) auf der Grundlage der Information (R) bezüglich dem Betrieb des Funkkommunikationssystems (S) im Hinblick auf eine Modifikation (CP3') des Betriebs der primären Funkkommunikationsvorrichtung (Prim) und/oder der Gruppe sekundärer Kommunikationsvorrichtungen (Sec) auf der Grundlage der Information (IC).

11. Verfahren nach Anspruch 10, wobei die Information (R) bezüglich dem Betrieb des Funkkommunikationssystems (S) von einer Auskunftsvorrichtung (NAP) stammend empfangen wird, die zum Funkkommunikationssystem (S) gehört.

## Claims

1. A radiocommunication method between a primary communication device (Prim) and at least one secondary communication device (Sec), the primary device (Prim) being able to be configured to become a secondary device and vice versa, the method using an application carrier frequency (fpa) for the transmission of an application data (A), the method being executed by the primary communication device (Prim) and comprising the following steps:
• Receiving (SP2) an information BER relating to a quality of a communication link on at least one network carrier frequency (fp) comprised in a group of carrier frequencies (P1) coming from the at least one secondary communication device (Sec);
• Carrying out (SP3) a communication diagnosis based on an information BER relating to the quality of the communication link on at least one network carrier frequency (fp):
• Extracting (SP4) of a subgroup of carrier frequencies (P2) likely to become application carrier frequencies and to carry a signal to be transmitted from the group of carrier frequencies (P1);
• Selecting (SP5) the application carrier frequency (fpa) in the subgroup of carrier frequencies (P2);
• Establishing (SP6) an application communication (Com) between the primary communication device (Prim) and the at least one secondary communication device (Sec) on the application carrier frequency (fpa).

2. The method according to claim 1, further comprising the following step:
• Sending (SP1) of an information packet (B) on the at least one carrier frequency (fp) comprised in the group of carrier frequencies (P1) by the primary communication device (Prim) towards the at least one secondary communication device (Sec);

3. The method according to any of claims 1 or 2 wherein the radiocommunication is carried out between a primary communication device (Prim) and a group of secondary communication devices, the extraction (SP4) of the subgroup of carrier frequencies (P2) carried out according to the following steps:
• Attributing (SP4-1) a partial rating for each secondary communication device (Sec) comprised in the group of secondary communication devices for at least one carrier frequency (fp) comprised in the group of carrier frequencies (P1) from the information BER relating to the quality of the communication link on said carrier frequency (fp) received from said secondary communication device (Sec);
• Determining (SP4-2) an overall rating for the at least one carrier frequency (fp) comprised in the group of carrier frequencies (P1) from a plurality of partial ratings for the carrier frequency (fp) obtained for a plurality of secondary communication devices comprised in the group of secondary communication devices;
• Classifying (SP4-3) the at least one carrier frequency (fp) in the subgroup of carrier frequencies (P2) on the basis of the overall rating for the at least one carrier frequency (fp).

4. The method according to claim 3, wherein the step of determining (SP4-2) an overall rating for a frequency comprises the following step:
• Excluding at least one secondary communication device (Sec) on the basis of the partial rating assigned for the calculation of the overall rating for at least one carrier frequency (fp) comprised in the group of carrier frequencies (P1);

5. The method according to any one of the preceding claims, further comprising the following steps:
• Calculating (SP9') an information PER relating to the quality of the transmission of the application data (A) transmitted by the at least one secondary communication device (Sec) on the application carrier frequency (fpa) and/or
• Receiving (SP8) the information PER relating to the quality of the transmission of the application data (A) transmitted by the primary communication device (Prim) on the application carrier frequency (fpa), coming from at least one secondary communication device (Sec);
• Carrying out (SP10) of an application diagnosis on the application carrier frequency (fpa) from the information PER relating to the quality of transmission of the application data (A) on the application carrier frequency (fpa);
• Updating (SP11) the subgroup of carrier frequencies (P2) from the application diagnosis on the application carrier frequency (fpa);
The following steps of the method being carried out again:
• Selecting (SP5) the application carrier frequency (fpa) in the subgroup of carrier frequencies (P2);
• Establishing (SP6) an application communication (Com) between the primary communication device (Prim) and the at least one secondary communication device (Sec) on the application carrier frequency (fpa).

6. The radiocommunication method between a primary communication device (Prim) and at least one secondary communication device (Sec), the primary device (Prim) can be configured to become a secondary device and vice versa, the method using an application carrier frequency (fpa) for the transmission of application data (A), the method being executed by the at least one secondary communication device (Sec) and comprising the following steps:
• Elaborating (SS3) of an information BER relating to the quality of a communication link on at least one carrier frequency (fp) comprised in a group of carrier frequencies (P1) to be transmitted to the primary communication device (Prim);
• Sending (SS4) the information BER relating to the quality of the communication link on at least one carrier frequency (fp) comprised in the group of carrier frequencies (P1) to the primary communication device (Prim).

7. The method according to claim 6 further comprising the steps of:
• Receiving (SS1) an information packet (B) on the at least one carrier frequency (fp) comprised in the group of carrier frequencies (P1) coming from the primary communication device (Prim);
• Configuring (SS2) the at least one secondary communication device (Sec) on the basis of the information packet (B) on the at least one carrier frequency comprised in the group of carrier frequencies (P1) coming from the primary communication device (Prim);
• Synchronizing (SS2') the at least one secondary communication device (Sec) to the primary communication device (Prim) on the basis of the information packet (B) on the at least one carrier frequency (fp) comprised in the group of carrier frequencies (P1) coming from the primary communication device (Prim).

8. The method according to claim 6 or 7 further comprising the steps of:
• Calculating (SS6) an information PER relating to a quality of transmission of an application data (A) transmitted by at least one secondary communication device (Sec) on the application carrier frequency (fpa);
• Sending (SS7) the information PER relating to the quality of the transmission of the application data (A) transmitted by at least one secondary communication device (Sec) on the application carrier frequency (fpa) to the primary communication device (Prim).

9. The radiocommunication method according to any of claims 1 to 5 between the primary communication device (Prim) and the at least one secondary communication device (Sec), the method using an application carrier frequency (fpa) for a transmission of application data (A), the transmission of the application data (A) being carried out by a plurality of radio packets (PR), the method being executed by the primary communication device (Prim) and comprising the following steps:
• A hierarchy (H1) of the primary communication device (Prim) and at least one secondary communication device (Sec);
• A prioritization (H2) for the transmission of the application data (A) on the application carrier frequency (fpa) on the basis of the prioritization to designate a priority communication device;
• A transmission (H3) of the application data (A) on the application carrier frequency (fpa) by a plurality of radio packets (PR) with a redundancy of the application data (A) transmitted by priority communication device.

10. A method for managing an operation of a radiocommunication system (S) between a primary communication device (Prim) and at least one secondary communication device (Sec), the primary device (Prim) being able to be configured to become secondary device and vice versa, the primary communication device (Prim) implementing a radiocommunication method according to any of claims 1 to 5 or 9 and/or the secondary communication device (Sec) implementing a radiocommunication method according to any of claims 6 to 8, the system comprising a control center (CT), the method being executed by the control center (CT) and comprising the following steps:
• Receiving (CP1') an information (R) relating to the operation of the radiocommunication system (S) by the control center (CT);
• Sending (CP2') an information (IC) relating to a management operation of the radiocommunication system (S) on the basis of the information (R) relating to the operation of the radiocommunication system (S) with a view to a modification (CP3') of the operation of the primary radio communication device (Prim) and/or the group of secondary communication devices (Sec) on the basis of the information (IC).

11. The method according to claim 10, wherein the information (R) relating to the operation of the radiocommunication system (S) is received from an information device (NAP) belonging to the radiocommunication system (S).
